(19) **Europäisches Patentamt / European Patent Office / Office européen des brevets**

(11) **EP 3 656 806 B1**

(12) **EUROPEAN PATENT SPECIFICATION**

(45) Date of publication and mention
of the grant of the patent:
**21.08.2024 Bulletin 2024/34**

(21) Application number: **18835020.1**

(22) Date of filing: **11.07.2018**

(51) International Patent Classification (IPC):
**C08J 5/24** *(2006.01)*  **C08G 18/67** *(2006.01)*
**C08G 18/68** *(2006.01)*  **C08J 5/04** *(2006.01)*
**C08J 5/18** *(2006.01)*

(52) Cooperative Patent Classification (CPC):
**C08J 5/18; C08G 18/67; C08G 18/68; C08J 5/042;
C08J 5/243; C08J 5/249;** C08J 2363/10

(86) International application number:
**PCT/JP2018/026167**

(87) International publication number:
**WO 2019/017254 (24.01.2019 Gazette 2019/04)**

(54) **SHEET MOLDING COMPOUND, FIBER-REINFORCED COMPOSITE MATERIAL, AND METHOD FOR PRODUCING FIBER-REINFORCED COMPOSITE MATERIAL**

BAHNFORMVERBINDUNG, FASERVERSTÄRKTER VERBUNDSTOFF UND VERFAHREN ZUR HERSTELLUNG EINES FASERVERSTÄRKTEN VERBUNDSTOFFES

COMPOSÉ POUR MOULAGE DE FEUILLE, MATÉRIAU COMPOSITE RENFORCÉ PAR FIBRES, ET PROCÉDÉ DE PRODUCTION D'UN MATÉRIAU COMPOSITE RENFORCÉ PAR FIBRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.07.2017 JP 2017141254
27.03.2018 JP 2018059324**

(43) Date of publication of application:
**27.05.2020 Bulletin 2020/22**

(73) Proprietor: **Mitsubishi Chemical Corporation
Tokyo 100-8251 (JP)**

(72) Inventors:
• **TSUCHIYA, Seiji**
 **Tokyo 100-8251 (JP)**
• **OGASAWARA, Hayato**
 **Tokyo 100-8251 (JP)**
• **KONAMI, Yukichi**
 **Tokyo 100-8251 (JP)**
• **NAKAO, Hiroyuki**
 **Tokyo 100-8251 (JP)**

• **FURUYA, Shinichirou**
 **Tokyo 100-8251 (JP)**
• **NABESHIMA, Yasuhiko**
 **Tokyo 100-8251 (JP)**
• **TAKAHASHI, Atsushi**
 **Tokyo 100-8251 (JP)**

(74) Representative: **Hoffmann Eitle
Patent- und Rechtsanwälte PartmbB
Arabellastraße 30
81925 München (DE)**

(56) References cited:
EP-A1- 3 613 585     WO-A1-2016/039326
JP-A- 2003 292 648    JP-A- 2005 075 988
JP-A- 2005 154 457    JP-A- 2008 540 770
JP-A- 2008 543 985    JP-A- 2009 523 889
JP-A- H1 143 596     JP-A- H1 171 418
US-A1- 2003 065 057   US-A1- 2006 252 868
US-A1- 2013 281 576   US-A1- 2017 298 199

**EP 3 656 806 B1**

**Description**

[Technical Field]

The present invention relates to a sheet molding compound, a fiber-reinforced composite material, and a method for producing a fiber-reinforced composite material.

[Background Art]

As a method for producing a molded article of a fiber-reinforced composite material, a method of subjecting a sheet molding compound (hereinafter sometimes referred to as "SMC") to heat and pressure molding using a mold has been known.

An SMC is a compound obtained by impregnating a sheet-like reinforcing fiber group in which shortly cut reinforcing fibers are deposited with a resin composition containing a thermosetting resin.

As a resin composition for SMCs, one containing a vinyl ester resin or an unsaturated polyester resin is generally used (for example, Patent Documents 1 to 5).

A thickener may be blended in the resin composition for SMCs. It is possible to enhance the impregnation properties into the reinforcing fiber group by lowering the viscosity of the resin composition before thickening, and to improve the shape retention properties, handling properties and the like of SMC by thickening after impregnation into the reinforcing fiber group.

Although glass fibers have been widely used as reinforcing fibers, carbon fibers are used in some cases in recent years for the purpose of weight reduction.

When molding an SMC in a mold, the resin composition and the reinforcing fibers flow integrally to fill the mold cavity. Therefore, SMCs are suitable, for example, when producing molded articles of various shapes such as molded articles having partially different thicknesses and molded articles having ribs or bosses.

Patent Document 6 describes resin formulations for sheet molding compounds comprising an organic-modified, inorganic clay, a thermosetting resin, a low profile agent, a reinforcing agent, a low-density filler, and substantially the absence of calcium carbonate. Also described are blends of isophthalate modified, maleic-glycol polyester resin -glycol and maleate-glycol polyester resins that provide low density, thermosetting sheet molding compounds.

Patent Document 7 describes a fiber-reinforced composite material molded article including a thick portion having a thickness equal to or greater than 10 mm, in which the thick portion has an inner layer which is formed of a cured material of a composite material (A) containing reinforcing fiber and an epoxy resin and a surface layer which is formed of a cured material of a composite material (B) containing reinforcing fiber and a vinyl ester resin.

Patent Document 8 describes a molding material, having: (A): a fiber substrate made of carbon fibers 5 mm or longer; (B): at least either an epoxy (meth)acrylate resin or an unsaturated polyester resin; (C): (C-1) inorganic fibrous filler with a cross-sectional area of at least 0.8 $\mu m^2$, or (C-2) inorganic flaky filler with a cross-sectional area of at least 0.05 $\mu m^2$, both of which have an aspect ratio of 2.0 or higher and a length of less than 3 mm; and (D): a polyisocyanate compound.

Patent Document 9 describes a resin composition for a fiber-reinforced composite material comprising a poly(glycidyloxyaryl) compound (A), a polymerizable monomer (B) which is an unsaturated carboxylic acid or an anhydride thereof and has a molecular weight of 160 or less, an aromatic vinyl compound or a (meth)acrylate (C), and a radical polymerization initiator (D), wherein an equivalent ratio [glycidyloxy group/acid group] of a glycidyloxy group in the component (A) to an acid group in the component (B) is 1/1 to 1/0.48, and a molar ratio [(B)/(C)] of the component (B) to the component (C) is in the range of 1/0.55 to ½.

[Citation List]

[Patent Documents]

[Patent Document 1] Japanese Unexamined Patent Application, First Publication No. 2006-131759
[Patent Document 2] Japanese Unexamined Patent Application, First Publication No. 2008-81548
[Patent Document 3] Japanese Unexamined Patent Application, First Publication No. 2011-231275
[Patent Document 4] Japanese Unexamined Patent Application, First Publication No. 2012-25122
[Patent Document 5] Japanese Unexamined Patent Application, First Publication No. 2012-111909
[Patent Document 6] US 2006/252868 A1
[Patent Document 7] EP 3 613 585 A1

[Patent Document 8] WO 2016/039326 A1
[Patent Document 9] US 2013/281576 A1

[Summary of Invention]

[Technical Problem]

However, an SMC using a resin composition containing a vinyl ester resin or unsaturated polyester resin has a problem in that unintended curing tends to proceed before heat and pressure molding (storage stability is poor). If curing of the SMC proceeds before heat and pressure molding, the flowability at the time of heat and pressure molding of the SMC decreases and the moldability decreases.

On the other hand, when subjecting an SMC using a resin composition containing a vinyl ester resin or unsaturated polyester resin to heat and pressure molding in a mold, a warp is likely to occur due to the differential shrinkage between the reinforcing fiber and the thermosetting resin, linear expansion at the time of cooling, and the like.

Progress has been made in ameliorating the warp of the cured products for SMCs using glass fibers as reinforcing fibers (Patent Documents 4 and 5). However, in the case of an SMC using a carbon fiber as a reinforcing fiber, the warp of the cured product has not been sufficiently ameliorated.

One aspect of the present invention has an object of providing an SMC excellent in storage stability, and a fiber-reinforced composite material excellent in heat resistance or mechanical properties using the SMC.

Another aspect of the present invention has an object of providing a fiber-reinforced composite material in which warpage is sufficiently prevented even in the case of using an SMC containing a carbon fiber in particular as a reinforcing fiber, and a method for producing the same.

[Solution to Problem]

The present invention includes the following aspects.

[1] A sheet molding compound comprising:

a thickened product of a resin composition containing a vinyl ester resin, a thickener, a polymerization initiator, a polymerization inhibitor and isobornyl methacrylate; and
a reinforcing fiber.

[2] A fiber-reinforced composite material comprising a cured product of the sheet molding compound according to the invention.

[3] A method for producing a fiber-reinforced composite material, the method comprising a step of filling and molding the sheet molding compound according to the invention in a mold,
wherein a temperature of the hottest portion of the mold is made lower than a glass transition temperature Tg of a cured product of the sheet molding compound by 10°C or more when the sheet molding compound is molded, wherein glass transition temperature Tg is determined by the method described later under the heading "Measurement of glass transition temperature Tg".

[Advantageous Effects of Invention]

According to one aspect of the present invention, it is possible to provide an SMC excellent in storage stability, and a fiber-reinforced composite material excellent in heat resistance or mechanical properties using the SMC.

According to another aspect of the present invention, it is possible to provide a fiber-reinforced composite material in which warpage is sufficiently prevented even in the case of using an SMC containing a carbon fiber in particular as a reinforcing fiber, and a method for producing the same.

[Brief Description of Drawings]

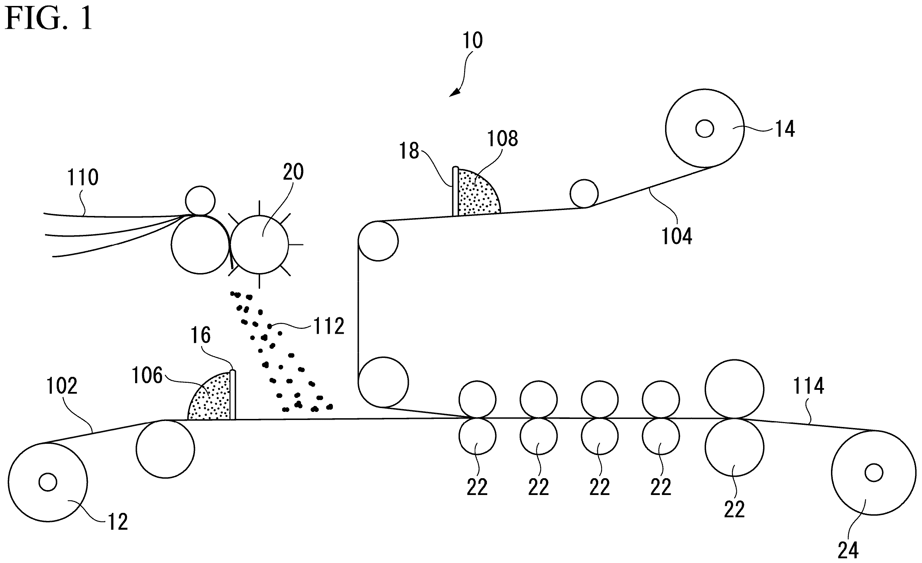

FIG. 1 is a schematic configuration view showing an example of an SMC producing apparatus.

[Description of Embodiments]

In the present specification, the term "resin composition" does not comprise a reinforcing fiber.

An "ethylenically unsaturated compound" is a compound having an ethylenically unsaturated group. Hereinafter, the ethylenically unsaturated compound is also referred to as "component (E)".

For the glass transition temperatures Tg of homopolymers of ethylenically unsaturated compounds, values described in Polymer Handbook, 4th Edition (John Wiley & Sons, Inc., 1999), "Polymer Data Handbook" edited by The Society of Polymer Science, Japan (1986) and the ACRYESTER (registered trademark) catalog (2016) of Mitsubishi Chemical Corporation can be used. For the glass transition temperatures Tg of homopolymers that are not described in these documents, values described in other documents and product catalogs or values measured by producing homopolymers can be used.

The Q value is a value relating to the radical polymerization reactivity of the ethylenically unsaturated compound proposed by Alfrey-Price. This value is summarized in the 4th edition (1999) or 2nd edition (1975) of Polymer Handbook (John Wiley & Sons, Inc.), and the like, and can be referred to. For the Q values of ethylenically unsaturated compounds that are not described in these documents, values described in other documents and product catalogs or values obtained by measurement can be used.

The viscosity of the resin composition is a value measured by a B-type viscometer at 23°C.

The expressions "after 7 days of production" and "after 50 days of production" of the resin composition indicate after 7 days (within $\pm$ 12 hours after 168 hours) and after 50 days (within $\pm$ 12 hours after 1,200 hours) from the time point where the resin composition is produced, respectively. The "time point where the resin composition is produced" indicates a time point where all the components constituting the resin composition are mixed.

The indentation hardness of SMC (sheet molding compound) is a value obtained in the following manner: a load of 10 kg is applied for 30 seconds with an indenter having a diameter of 27 mm at a temperature within the range of 25°C $\pm$ 5°C on a test piece obtained by superposing 8 sheets of SMC; a total indentation depth L (mm) is measured when a load of 17.5 kg is further applied for 90 seconds and L is multiplied by 100 to obtain an indentation hardness value; and the measurement is carried out at three points on the test piece, and the indentation hardness values obtained at these three points were averaged. The details are as described in the Examples to be described later.

The expressions "after 7 days of production" and "after 50 days of production" of SMC indicate after 7 days (within $\pm$ 12 hours after 168 hours) and after 50 days (within $\pm$ 12 hours after 1,200 hours) from the time point where the SMC is produced, respectively. The "time point where the SMC is produced" indicates a time point where the resin composition is impregnated into the reinforcing fiber and aging is completed. The term "aging" indicates holding at an arbitrary temperature for an arbitrary period of time. When the resin composition contains a thickener, the resin composition is thickened by an aging process. That is, when the resin composition contains a thickener, the time point where the resin composition is impregnated into the reinforcing fiber and thickened is the time point where the SMC is produced. In the measurement of indentation hardness, aging conditions are typically set to 168 $\pm$ 12 hours at 23°C or equivalent conditions to these (conditions for thickening to the same degree). Further, the term "thickened product" refers to the resin composition in a state in which the viscosity is increased by the action of a thickener.

The term "(meth)acrylate" means acrylate or methacrylate.

The symbol "-" indicating a numerical range means that numerical values described before and after that are included as the lower limit value and the upper limit value.

The glass transition temperature Tg of a cured product of SMC (hereinafter also referred to as "SMC cured product") is a value determined by dynamic viscoelasticity measurement. More specifically, using a dynamic viscoelasticity measuring device, the storage modulus and the loss modulus of the test specimen of the SMC cured product are determined while changing the measurement temperature. The temperature at which Tan6 represented by the ratio of loss modulus to storage modulus (loss modulus / storage modulus) indicates an upwardly convex peak is taken as the glass transition temperature Tg. It should be noted that dynamic viscoelasticity measurement may also be referred to as dynamic mechanical analysis (DMA).

The following conditions are employed as the measurement conditions in the dynamic viscoelasticity measurement.

Test specimen: a strip test piece having a thickness of 2 mm
Rate of temperature increase: 5°C / min
Span between chucks: 35 mm
Strain: 0.005
Frequency: 1 Hz

[SMC]

A first aspect of the SMC of the present invention is an SMC comprising a thickened product of a resin composition containing the following component (A), the following component (B), the following component (C), the following component (D) and the following component (E1), and a reinforcing fiber. It can also be said that this resin composition contains components (A) to (E), and the component (E) contains the component (E1). The resin composition can further contain other components other than the components (A) to (E1), as needed, as long as the effects of the present invention are not impaired.

Component (A): a vinyl ester resin.
Component (B): a thickener.
Component (C): a polymerization initiator.
Component (D): a polymerization inhibitor.
Component (E1): isobornyl methacrylate.

A second aspect of the SMC of the present invention is an SMC comprising a thickened product of a resin composition containing the following component (A), the following component (B), the following component (C), the following component (D) and the following component (E2), and a reinforcing fiber. It can also be said that this resin composition contains components (A) to (E), and the component (E) contains the component (E2). The resin composition can further contain other components other than the components (A) to (E2), as needed, as long as the effects of the present invention are not impaired.

Component (A): at least one of a vinyl ester resin and an unsaturated polyester resin.
Component (B): a thickener.
Component (C): a polymerization initiator.
Component (D): a polymerization inhibitor.
Component (E2): isobornyl methacrylate whose homopolymer has a glass transition temperature Tg of 55°C or higher.

<Component (A)>

The vinyl ester resin is a reaction product of an epoxy resin component and an unsaturated monobasic acid component (unsaturated monobasic acid epoxy ester).
The epoxy resin component is a compound having at least two epoxy groups in one molecule, and examples thereof include a diglycidyl ether type epoxy resin having a bisphenol compound represented by bisphenol A, bisphenol F and brominated bisphenol A as a main skeleton; a polyglycidyl ether type epoxy resin having a polynuclear phenolic compound represented by phenol novolac, cresol novolac and brominated phenol novolac as a main skeleton; a polyglycidyl ester type epoxy resin having an organic polybasic acid represented by dimer acid and trimellitic acid as a main skeleton; and a glycidyl ether type epoxy resin having a diol compound such as an ethylene oxide or propylene oxide adduct of bisphenol A, glycol, and hydrogenated bisphenol A as a main skeleton. One type of these epoxy resins may be used alone or two or more types thereof may be used in combination.
The unsaturated monobasic acid component is a monobasic acid having an ethylenically unsaturated group, and examples thereof include acrylic acid, methacrylic acid, crotonic acid and sorbic acid. One type of these unsaturated monobasic acid components may be used alone or two or more types thereof may be used in combination.
As the vinyl ester resin, an epoxy (meth)acrylate resin is preferable. The epoxy (meth)acrylate resin is a vinyl ester resin using acrylic acid or methacrylic acid as the unsaturated monobasic acid component.
The vinyl ester resin is derived from an unsaturated monobasic acid component and has an ethylenically unsaturated group.
The number of ethylenically unsaturated groups that the vinyl ester resin has in one molecule is preferably 1 to 2. If the number of the ethylenically unsaturated groups is equal to or less than the above upper limit value, the polymerizability at the time of curing the resin composition is further improved.
The vinyl ester resin typically has a hydroxyl group.
The number of hydroxyl groups that the vinyl ester resin has in one molecule is preferably from 1 to 4. If the number of the hydroxyl groups is equal to or more than the above lower limit value, the thickening characteristics of the resin composition are further improved when combined with the component (B). If the number of the hydroxyl groups is equal to or less than the above upper limit value, the flowability of the resin composition is further improved when combined with the component (B).
Component (A) can further comprise an unsaturated polyester resin. The unsaturated polyester resin is a polyester resin synthesized by the condensation of an $\alpha,\beta$-olefin-based unsaturated dicarboxylic acid and a dihydric glycol (polycondensate of the $\alpha,\beta$-olefin-based unsaturated dicarboxylic acid and the dihydric glycol).
In the synthesis of the polyester resin, in addition to these two components, dicarboxylic acids other than $\alpha,\beta$-olefin-based unsaturated dicarboxylic acids (saturated dicarboxylic acids, aromatic dicarboxylic acids and the like), dicyclopentadienes reactive with dicarboxylic acids, alcohols other than dihydric glycols (monohydric alcohols (monools), trihydric alcohols (triols) and the like) or the like can be used in combination.

Examples of the α,β-olefin-based unsaturated dicarboxylic acid include maleic acid, fumaric acid, itaconic acid, citraconic acid, and anhydrides of these dicarboxylic acids.

Examples of other dicarboxylic acids which can be used in combination with the α,β-olefin-based unsaturated dicarboxylic acid include adipic acid, sebacic acid, succinic acid, gluconic acid, phthalic acid anhydride, o-phthalic acid, isophthalic acid, terephthalic acid, tetrahydrophthalic acid and tetrachlorophthalic acid.

Examples of the dihydric glycol include alkanediols, oxaalkanediols and alkylene oxide adducts of bisphenol A. Examples of the alkylene oxide include ethylene oxide and propylene oxide.

Examples of the alkanediols include ethylene glycol, 1,2-propylene glycol, 1,3-propylene glycol, 1,3-butanediol, 1,4-butanediol, neopentyl glycol, 1,5-pentanediol, 1,6-hexanediol and cyclohexanediol.

Examples of the oxaalkanediols include dioxyethylene glycol, dipropylene glycol and triethylene glycol.

Examples of monohydric or trihydric alcohols that can be used in combination with glycols include octyl alcohol, oleyl alcohol and trimethylolpropane.

The unsaturated polyester resin is derived from an α,β-olefin-based unsaturated dicarboxylic acid and has an ethylenically unsaturated group.

In addition, the unsaturated polyester resin typically has a hydroxyl group.

The number of hydroxyl groups that the unsaturated polyester resin has in one molecule is preferably from 1 to 3. If the number of the hydroxyl groups is equal to or more than the above lower limit value, the thickening characteristics of the resin composition are further improved when combined with the component (B). If the number of the hydroxyl groups is equal to or less than the above upper limit value, the flowability of the resin composition is further improved when combined with the component (B).

The vinyl ester resin and the unsaturated polyester resin can be appropriately selected from known vinyl ester resins and unsaturated polyester resins, respectively.

Each one of the vinyl ester resins and the unsaturated polyester resins may be used alone or two or more types thereof may be used in combination.

The component (A) is preferably a mixture of the vinyl ester resin and the unsaturated polyester resin. By using the vinyl ester resin and the unsaturated polyester resin in combination, the storage stability of SMC tends to further improve, as compared with the case where either one of them is used.

In the above mixture, a mass ratio of the vinyl ester resin to the unsaturated polyester resin ((vinyl ester resin): (unsaturated polyester resin)) is preferably from 1: 9 to 9: 1, more preferably from 1: 7 to 7: 1, still more preferably from 1: 4 to 4: 1, and particularly preferably from 1: 2 to 2: 1.

<Component (B)>

The component (B) is a thickener.

The component (B) is not particularly limited and known thickeners can be used, and examples thereof include polyisocyanate compounds, such as diisocyanate compounds, and oxides or hydroxides of alkaline earth metals (such as magnesium oxide, magnesium hydroxide and calcium hydroxide). One type of these thickeners may be used alone or two or more types thereof may be used in combination.

The component (B) is preferably a diisocyanate compound. When the component (B) is a diisocyanate compound, the component (A) preferably has a hydroxyl group. The hydroxyl group of the component (A) and the isocyanate group of the diisocyanate compound react with each other to thereby form a linear ethylenically unsaturated group-containing prepolymer, and the prepolymer functions effectively to produce an appropriate viscosity for the SMC.

As the diisocyanate compound, for example, a compound (B-1) represented by the formula: $OCN-R^1-NCO$ (wherein $R^1$ is a hydrocarbon group), a diisocyanate prepolymer (B-2), their modified products and the like can be mentioned.

Examples of the compound (B-1) include 2,4-toluene diisocyanate, 2,6-toluene diisocyanate, 4,4'-diphenylmethane diisocyanate, isophorone diisocyanate and hexamethylene diisocyanate.

Examples of the diisocyanate prepolymer (B-2) include diisocyanate prepolymers having isocyanate groups at both ends, which can be obtained by the reaction of a polyether polyol or polyester polyol having a hydroxyl group with the compound (B-1).

<Component (C)>

The component (C) is a polymerization initiator.

The component (C) is not particularly limited and known polymerization initiators can be used, and examples thereof include organic peroxides such as ketone peroxides, hydroperoxides, diacyl peroxides, dialkyl peroxides, peroxyketals, alkyl peresters and percarbonates. One type of these organic peroxides may be used alone or two or more types thereof may be used in combination.

As the component (C), a polymerization initiator having a 10-hour half-life temperature of 70 to 120°C is preferable. If the 10-hour half-life temperature is 70°C or more, the storage stability of the SMC is further improved. If the 10-hour half-life temperature is 120°C or less, the moldability of the resin composition is excellent, and it is possible to suppress the formation of an uncured portion or the persistence of the component (E) when subjecting the SMC to heat and pressure molding.

The 10-hour half-life temperature of the component (C) is more preferably from 80 to 110°C, and still more preferably from 90 to 100°C.

The 10-hour half-life temperature is a temperature required to thermally decompose the polymerization initiator and reduce the concentration of the polymerization initiator to half of the initial concentration after 10 hours. More specifically, when a benzene solution of a polymerization initiator having a concentration of 0.2 mol/L is prepared and the polymerization initiator is thermally decomposed in this benzene solution, it is a temperature at which the half life of the polymerization initiator is 10 hours.

Specific examples of the component (C) include the following. The temperatures in parentheses after the compound names listed below indicate 10-hour half-life temperatures.

Ketone peroxides such as methyl ethyl ketone peroxide (105°C), methyl isobutyl ketone peroxide (88°C) and cyclohexanone peroxide (90°C);
diacyl peroxides such as benzoyl peroxide (72°C) and dicumyl peroxide (116°C);
dialkyl peroxides such as succinic acid peroxide (66°C);
peroxyketals such as 1,1-di(t-butylperoxy)-3,3,5-trimethylcyclohexane (90°C), 1,1-di(t-hexylperoxy)-3,3,5-trimethylcyclohexane (87°C), 1,1-di(t-butylperoxy) cyclohexane (93°C), 2,2-bis(4,4-di-t-butylperoxycyclohexyl) propane (92°C) and 1,1-bis(t-butylperoxy) cyclododecane (95°C);
alkyl peresters such as t-hexylperoxy-2-ethylhexanoate (69°C), 1,1,3,3-tetramethylbutylperoxy-3,5,5-trimethylhexanoate (86°C), t-amylperoxy-2-ethylhexanoate (70°C), t-butylperoxy-2-ethylhexanate (74°C), t-amylperoxy-3,5,5-trimethylhexanoate (95°C), t-butylperoxy-3,5,5-trimethylhexanoate (97°C), t-butylperoxyisobutyrate (78°C), di-t-butylperoxyhexahydroterephthalate (83°C), t-butylperoxymaleic acid (96°C) and t-butyl peroxybenzoate (105°C);
percarbonates such as t-butylperoxyisopropyl carbonate (97°C), 1,1,3,3-tetramethylbutylperoxyisopropyl carbonate (88°C), t-amylperoxyisopropyl carbonate (96°C), t-hexylperoxyisopropyl carbonate (95°C);
hydroperoxides such as cumene hydroperoxide (159°C), t-butyl hydroperoxide (171°C) and 1,1,3,3-tetramethylbutyl hydroperoxide (135°C).

<Component (D)>

The component (D) is a polymerization inhibitor.

The component (D) has a function (radical scavenging function) of reacting with an active radical species that causes radical polymerization to form an inactive radical or a stable compound that does not cause radical polymerization. When the resin composition contains the component (D), the active radical species (for example, radicals generated from the component (C)) which are generated in a trace amount after the production of the resin composition or SMC are captured by the component (D), the progress of the reaction by the active radical species (polymerization of the component (A) or component (E), crosslinking reaction, and the like) is suppressed, and the storage stability of the SMC is enhanced.

The component (D) can be appropriately selected from various compounds generally known as polymerization inhibitors, and examples thereof include catechols such as catechol and t-butyl catechol; hydroquinones such as hydroquinone, p-t-butyl catechol, 2,5-t-butyl hydroquinone and mono-t-butyl hydroquinone; and quinones such as 1,4-benzoquinone, naphthoquinone, phenanthraquinone, p-xyloquinone, p-toluquinone, 2,6-dichloroquinone, 2,5-diphenyl-p-benzoquinone, 2,5-diacetoxy-p-benzoquinone and 2,5-dicaproxy-p-benzoquinone. One type of these polymerization inhibitors may be used alone or two or more types thereof may be used in combination.

When the component (B) is a diisocyanate compound, as the component (D), those having no hydroxyl group in the molecule are preferable. When the component (D) has a hydroxyl group, the hydroxyl group of the component (D) reacts with the isocyanate group of the component (B). As a result, there is a possibility that the thickening effect by the component (B) and the radical scavenging action by the component (D) may not be sufficiently exhibited. When the component (D) has no hydroxyl group, the thickening effect is not inhibited, and the radical scavenging action is sufficiently exhibited.

Among the above possibilities, quinones are preferable as the component (D), and 1,4-benzoquinone is particularly preferable. The quinones have a very strong scavenging action on the radicals generated from the component (C), particularly the radicals generated from organic peroxides. Moreover, since it does not have a hydroxyl group, even when the component (B) is a diisocyanate compound, the thickening effect is not inhibited and the radical scavenging action is sufficiently exhibited. Therefore, the storage stability of the SMC is further improved.

<Component (E)>

The component (E) is an ethylenically unsaturated compound. The number of ethylenically unsaturated groups which the component (E) has in one molecule may be one or two or more.

In the first aspect described above, at least the component (E1) serving as an ethylenically unsaturated compound which is not thermally cured in the absence of a polymerization initiator is used as the component (E). By using the component (E1) as the component (E), an SMC having excellent storage stability can be obtained.

Whether or not the ethylenically unsaturated compound is thermally cured in the absence of the polymerization initiator can be judged, for example, by measuring the ethylenically unsaturated compound alone by gel permeation chromatography (GPC) and confirming the presence or absence of the formation of a polymerized component having a high molecular weight with time, and can also be judged from the Q value.

In the present invention component (E1) comprises at least isobornyl methacrylate (IBXMA). Examples of other components (E1) include (meth)acrylates, aromatic vinyls, vinyl cyanides, olefins, vinyl chlorides, vinyl esters other than the above-mentioned vinyl ester resins, and vinyl ethers. Among these components (E1), (meth)acrylates are preferable because they can further prevent warpage of the cured product of SMC.

Examples of (meth)acrylates other than isobornyl methacrylate (IBXMA) include methyl methacrylate (MMA), ethyl methacrylate (EMA), n-butyl methacrylate (BMA), i-butyl methacrylate (iBMA), t-butyl methacrylate (tBMA), 2-ethylhexyl methacrylate (EHMA), phenyl methacrylate (PhMA), benzyl methacrylate (BzMA), cyclohexyl methacrylate (CHMA), glycidyl methacrylate (GMA), tetrahydrofurfuryl methacrylate (THFMA), 2-hydroxyethyl methacrylate (HEMA), hydroxypropyl methacrylate (HPMA), 1,3-butanediol dimethacrylate (BDMA), ethylene glycol dimethacrylate (EDMA), 1,6-hexanediol dimethacrylate (HXMA), trimethylolpropane trimethacrylate (TMPMA), methyl acrylate (MA), ethyl methacrylate (EA), n-butyl acrylate (BA), i-butyl acrylate (iBA), t-butyl acrylate (tBA), 2-ethylhexyl acrylate (EHA), benzyl acrylate (BzA), cyclohexyl acrylate (CHA), isobornyl acrylate (IBXA), glycidyl acrylate (GA), tetrahydrofurfuryl acrylate (THFA), 2-hydroxyethyl acrylate (HEA), hydroxypropyl acrylate (HPA), 1,6-hexanediol diacrylate (HXA) and trimethylolpropane triacrylate (TMPA).

As the component (E1), one type may be used alone, or two or more types may be used in combination, but in view of further improving the storage stability of SMC, those having one ethylenically unsaturated group in one molecule are preferred.

Furthermore, in terms of relatively low odor levels, (meth)acrylates are preferred, and BDMA, EDMA, HXMA, THFMA and the like are more preferred.

IBXMA is used in the present invention from the viewpoints that the storage stability of SMC is further improved and the odor level is low.

Isobornyl methacrylate (IBXMA) having a Q value of 0.91 is used in the present invention. In the component (E1) other than IBMXMA, the Q value is preferably less than 1. The Q value of the component (E1) other than IBMXMA is more preferably in the range of 0.30 to 0.98, and still more preferably in the range of 0.40 to 0.95.

When the Q value is less than 1, preferably 0.98 or less and more preferably 0.95 or less, the storage stability of SMC tends to be further improved, and when the Q value is preferably 0.30 or more and more preferably 0.40 or more, the moldability of SMC, the mechanical properties of a cured product, and the like tend to be further improved more excellent.

As the component (E1) having a Q value of less than 1, for example, methyl methacrylate (MMA, Q value: 0.78), ethyl methacrylate (EMA, Q value: 0.76), n-butyl methacrylate (BMA, Q value: 0.82), i-butyl methacrylate (iBMA, Q value: 0.82), t-butyl methacrylate (tBMA, Q value: 0.76), cyclohexyl methacrylate (CHMA, Q value: 0.82), benzyl methacrylate (BzMA, Q value: 0.88), , tetrahydrofurfuryl methacrylate (THFMA, Q value: 0.45), glycidyl methacrylate (GMA, Q value: 0.96), ethylene glycol dimethacrylate (EDMA, Q value: 0.88), methyl acrylate (MA, Q value: 0.45), ethyl methacrylate (EA, Q value: 0.41), n-butyl acrylate (BA, Q value: 0.38), 2-ethylhexyl acrylate (EHA, Q value: 0.41), benzyl acrylate (BzA, Q value: 0.33), glycidyl acrylate (GA, Q value: 0.48), 2-hydroxyethyl acrylate (HEA, Q value: 0.84), hydroxypropyl acrylate (HPA, Q value: 0.96), and the like can be mentioned. One type of these ethylenically unsaturated compounds may be used alone or two or more types thereof may be used in combination.

Isobornyl methacrylate (IBXMA) having a flash point of 120°C is used in the present invention. Further, as the component (E1) other than IBXMA, a compound with a high flash point is preferable. When the flash point of the component (E1) is high, the glass transition temperature Tg of the SMC cured product tends to be high, the heat resistance of the fiber-reinforced composite material of the present invention containing this is improved, and the warpage tends to be reduced when a carbon fiber is used as the reinforcing fiber of the fiber-reinforced composite material.

More specifically, the flash point of the component (E1) other than IBXMA is preferably 80°C or higher, more preferably 85°C or higher, and still more preferably 100°C or higher. Although the upper limit of the flash point of the component (E1) is not particularly limited, for example, it is 150°C. The flash point of the component (E1) other than IBXMA may be, for example, from 80 to 150°C, from 85 to 150°C, or from 100 to 150°C.

The flash point in the present aspect is a value measured by the Cleveland open-cup flash point measurement method.

Examples of the component (E1) other than IBXMA having a flash point of 80°C or higher include 2-ethylhexyl methacrylate (EHMA, flash point: 92°C), benzyl methacrylate (BzMA, flash point: 115°C), glycidyl methacrylate (GMA, flash point: 86°C), tetrahydrofurfuryl methacrylate (THFMA, flash point: 106°C), 2-hydroxyethyl methacrylate (HEMA, flash point: 109°C), hydroxypropyl methacrylate (HPMA, flash point: 106°C), 1,3-butanediol dimethacrylate (BDMA, flash point: 130°C), ethylene glycol dimethacrylate (EDMA, flash point: 118°C), 1,6-hexanediol dimethacrylate (HXMA, flash point: 145°C), trimethylolpropane trimethacrylate (TMPMA, flash point: 174°C), isobornyl acrylate (IBXA, flash point: 108°C), tetrahydrofurfuryl acrylate (THFA, flash point: 108°C), 2-hydroxyethyl acrylate (HEA, flash point: 101°C), 2-hydroxypropyl acrylate (HPA, flash point: 100°C), 1,6-hexanediol diacrylate (HXA, flash point: 138°C) and trimethylolpropane triacrylate (TMPA, flash point: 149°C).

One type of the component (E1) having a flash point of 80°C or higher may be used alone, or two or more types thereof may be used in combination.

Further, in the Component (E1), an ethylenically unsaturated compound having a flash point of 80°C or more and an ethylenically unsaturated compound having a flash point of less than 80°C may be combined.

In the second aspect described above, at least the component (E2) serving as an ethylenically unsaturated compound whose homopolymer has a glass transition temperature Tg (hereinafter, also referred to as "homopolymer Tg") of 55°C or higher is used as the component (E). By using the component (E2) as the component (E), it is possible to obtain a fiber-reinforced composite material containing a cured product of SMC which is excellent in heat resistance.

In the present invention component (E2) comprises at least isobornyl methacrylate (IBXMA, homopolymer Tg: 155°C). Examples of the component (E2) other than isobornyl methacrylate (IBXMA) include styrene (St, homopolymer Tg: 100°C), methyl methacrylate (MMA, homopolymer Tg: 105°C), ethyl methacrylate (EMA, homopolymer Tg: 65°C), t-butyl methacrylate (tBMA, homopolymer Tg: 107°C), phenyl methacrylate (PhMA, homopolymer Tg: 100°C), cyclohexyl methacrylate (CHMA, homopolymer Tg: 83°C), tetrahydrofurfuryl methacrylate (THFMA, homopolymer Tg: 60°C) and 2-hydroxyethyl methacrylate (HEMA, homopolymer Tg: 55°C). One type of these ethylenically unsaturated compounds may be used alone or two or more types thereof may be used in combination.

The homopolymer Tg of the component (E2) is preferably 105°C or more, and more preferably 150°C or more because the heat resistance of the SMC cured product tends to be further improved. Although the upper limit of the homopolymer Tg of the component (E2) is not particularly limited, for example, it is 260°C. The homopolymer Tg of the component (E2) may be, for example, from 55 to 260°C, from 105 to 260°C, or from 150 to 260°C.

As the component (E2), IBXMA is used from the viewpoints that the storage stability of SMC is further improved and the odor level is low.

It should be noted that the component (E2) may also have the feature of the component (E1), and the component (E1) may also have the feature of the component (E2).

<Other components>

Examples of other components include additives such as inorganic fillers, internal mold release agents, stabilizers, moisture absorbents, surfactants, dispersing/wetting agents, pigments and colorants.

The type of inorganic filler is not particularly limited, and examples thereof include known inorganic fillers such as calcium carbonate, magnesium carbonate, aluminum hydroxide, silica, fused silica, barium sulfate, titanium oxide, aluminum oxide, calcium phosphate, talc, mica, clay and glass powders. One type of these inorganic fillers may be used alone or two or more types thereof may be used in combination.

There is no particular limitation on the type of internal mold release agent, and for example, known internal mold release agents such as phosphoric acid ester derivatives, fatty acid metal salts such as zinc stearate and surfactants such as sodium dialkyl sulfosuccinate can be mentioned. One type of these internal mold release agents may be used alone or two or more types thereof may be used in combination.

<Content of each component>

In the first and second aspects, the content of the component (A) in the resin composition is preferably from 10 to 99% by mass, and more preferably from 20 to 90% by mass with respect to the total mass (100% by mass) of the resin composition. If the content of the component (A) is equal to or more than the above lower limit value, the mechanical properties of the obtained fiber-reinforced composite material are further improved. If the content of the component (A) is equal to or less than the above upper limit value, the impregnation properties of the resin composition into the reinforcing fibers at the time of SMC production are further improved.

Further, in the first aspect, the content of the component (A) in the resin composition is preferably from 10 to 90 parts by mass and more preferably from 25 to 75 parts by mass with respect to a total of 100 parts by mass of the component (A) and the component (E1). If the content of the component (A) is equal to or more than the above lower limit value, a cured product of SMC with high mechanical strength can be easily produced. If the content of the component (A) is equal to or less than the above upper limit value, the impregnation properties of the resin composition into the reinforcing fibers such as carbon fibers can be improved.

In the first and second aspects, the content of the component (B) in the resin composition can be appropriately set according to the type of the component (B).

When the component (B) is a diisocyanate compound, the content of the component (B) is in such an amount that the number of isocyanate groups of the component (B) with respect to one hydroxyl group of the component (A) is preferably 0.1 or more and 1 or less, and more preferably 0.2 or more and 0.9 or less. If the content of the component (B) is equal to or more than the above lower limit value, the resin composition can be sufficiently thickened. If the content of the component (B) is equal to or less than the above upper limit value, it is possible to suppress excess isocyanate groups from reacting and foaming with moisture and leaving the resulting foams inside the fiber-reinforced composite material after molding.

When the component (B) is a diisocyanate compound, the content of the component (B) is preferably from 1 to 99% by mass, and more preferably from 5 to 90% by mass, with respect to the component (A) (100% by mass).

Further, when the component (B) is a diisocyanate compound and the component (A) has a hydroxyl group, the molar ratio (NCO/OH) of the isocyanate group of the component (B) with respect to the total amount of hydroxyl groups of the component (A) is preferably from 0.1 to 1, and more preferably from 0.2 to 0.9. When the molar ratio is equal to or more than the above lower limit value, the thickening effect is easily obtained, and the handling properties of SMC are easily improved. When the molar ratio is equal to or less than the above upper limit value, it is easy to suppress decreases in storage stability and moldability due to continuous thickening of the SMC with time.

In the first and second aspects, the content of the component (C) in the resin composition is preferably from 0.01 to 10% by mass, more preferably from 0.05 to 5% by mass, and still more preferably from 0.3 to 3% by mass, with respect to the component (A) (100% by mass). If the content of the component (C) is equal to or more than the above lower limit value, a sufficiently fast curing rate can be obtained at the time of heat and pressure molding, resulting in excellent fast curability. If the content of the component (C) is equal to or less than the above upper limit value, the storage stability of the SMC is further improved.

In the first and second aspects, the content of the component (D) in the resin composition is preferably from 0.01 to 1% by mass, and more preferably from 0.015 to 0.9% by mass, with respect to the component (A) (100% by mass). If the content of the component (D) is equal to or more than the above lower limit value, the storage stability of the SMC is further improved. If the content of the component (D) is equal to or less than the above upper limit value, a sufficiently fast curing rate can be obtained at the time of heat and pressure molding, resulting in excellent fast curability. In addition, the cured product is sufficiently crosslinked, and excellent surface quality can be obtained.

In the first and second aspects, the content of the component (E) in the resin composition is preferably from 1 to 99% by mass, more preferably from 10 to 90% by mass, and still more preferably from 25 to 75% by mass with respect to the total mass (100% by mass) of the component (A) and the component (E1). If the content of the component (E) is equal to or more than the above lower limit value, the impregnation properties of the resin composition into the reinforcing fibers at the time of SMC production are further improved. If the content of the component (E) is equal to or less than the above upper limit value, the mechanical properties of the obtained fiber-reinforced composite material are further improved.

The resin composition in the first and second aspects may further contain an ethylenically unsaturated compound other than the component (E1) and the component (E2) (hereinafter also referred to as "component (E3)"). As the component (E3), an ethylenically unsaturated compound which can be thermally cured even in the absence of a polymerization initiator and has a homopolymer Tg of less than 55°C can be mentioned, and specific examples thereof include a vinyl chloride monomer and the like. However, the component (E3) decreases the storage stability of SMC, the heat resistance of a cured product of SMC, and the like. Therefore, the smaller the content of the component (E3), the better. For example, the content is preferably 50 parts by mass or less and more preferably 30 parts by mass or less with respect to 100 parts by mass of the component (A), and it is particularly preferable that the component (E3) is not contained.

In the resin composition according to the first and second aspects, when the resin composition is allowed to stand at 23°C after production, a rate of increase of a viscosity after 50 days of production with respect to a viscosity after 7 days of production of the resin composition is preferably 100% or less.

If the rate of increase is 100% or less, the storage stability of the SMC is further improved. The rate of increase is preferably 90% or less and particularly preferably 80% or less.

The lower limit of the rate of increase is not particularly limited. In view of handling properties, -10% or more is preferable. The rate of increase may be, for example, from -10 to 100%, from -10 to 90%, or from -10 to 80%.

The rate of increase can be adjusted by the types of component (E1), component (E2) or component (C) (for example, the number of ethylenically unsaturated groups possessed by the component (E1) or the component (E2), the 10-hour half-life temperature of the component (C), and the like), the content of the component (D), and the like.

In the resin composition according to the first and second aspects, when the resin composition is allowed to stand at 23°C after production, the viscosity after 7 days of production of the resin composition is preferably from $1.0 \times 10^2$ to $1.5 \times 10^5$ Pa·s, and more preferably from $2.0 \times 10^3$ to $1.2 \times 10^5$ Pa s. If the viscosity after 7 days of production is equal to or more than the above lower limit value, the SMC would have sufficient shape retention properties, and the handling properties would be further improved. Further, the liquid dripping is less likely to occur at the time of SMC production. If the viscosity after 7 days of production is equal to or less than the above upper limit value, the impregnation properties of the resin composition into the reinforcing fibers at the time of SMC production are further improved.

The viscosity can be adjusted by the content, molecular weight and the like of the component (A).

<Method for producing resin composition>

The resin composition in the first aspect or the second aspect can be prepared by mixing each of the components constituting the resin composition. For example, by mixing the component (A), the component (B), the component (C), the component (D), the component (E1) or the component (E2), and other components as needed, the resin composition of the first or second aspect can be prepared.

As a mixing method, a conventionally used general method can be used as long as each component can be dispersed or dissolved uniformly. For example, all the components constituting the resin composition of the first or second aspect may be simultaneously mixed for preparation, or the components other than the component (B) may be mixed in advance and the obtained mixture and the component (B) may be mixed. For the mixing operation, mixers such as a three-roll mill, a planetary mixer, a kneader, a universal stirrer, a homogenizer and a homo dispenser can be used, although they are not limited thereto.

<Reinforcing fiber>

Examples of the reinforcing fibers include carbon fibers, glass fibers, aramid fibers, alumina fibers, silicon carbide fibers, boron fibers, metal fibers, natural fibers and mineral fibers. One type of these reinforcing fibers may be used alone or two or more types thereof may be used in combination.

As the reinforcing fiber, a carbon fiber is preferable from the viewpoints of high specific strength, high specific rigidity and weight reduction effects. Examples of the carbon fiber include a polyacrylonitrile (PAN)-based carbon fiber, a rayon-based carbon fiber, and a pitch-based carbon fiber.

The form of reinforcing fibers is typically a short fiber bundle. The short fiber bundle is a cut piece obtained by cutting a reinforcing fiber bundle (tow) in which continuous fibers are aligned in one direction into a predetermined length.

The number of filaments of the reinforcing fiber bundle is usually about 1,000 to 60,000, preferably 1,000 to 20,000, more preferably 1,000 to 15,000, and still more preferably 1,000 to 5,000. If the number of filaments of the reinforcing fiber bundle is equal to or more than the above lower limit value, the flowability of the SMC can be improved, and if it is equal to or less than the above upper limit value, the warpage of the SMC cured product can be further prevented.

The length of the reinforcing fiber (fiber length) is preferably set to the length of reinforcing fibers generally used in the SMC. The length of the reinforcing fiber is preferably from 1 to 60 mm, and more preferably from 1 to 25 mm. If the length of the reinforcing fiber is equal to or more than the above lower limit value, the mechanical properties of the fiber-reinforced composite material produced using the SMC are further improved. If the length of the reinforcing fiber is equal to or less than the above upper limit value, favorable flowability can be easily obtained when press molding the SMC.

The content of the reinforcing fiber is typically in the range of 5 to 90% by mass, preferably from 10 to 80% by mass, more preferably from 40 to 75% by mass, still more preferably from 45 to 70% by mass, and particularly preferably from 50 to 65% by mass, with respect to the total mass of the SMC. If the content of the reinforcing fiber is equal to or more than the above lower limit value, the reinforcing effect by the reinforcing fiber is sufficiently exhibited, and the mechanical strength of the obtained fiber-reinforced composite material is further improved. If the content of the reinforcing fiber is equal to or less than the above upper limit value, the flowability at the time of molding of the SMC is further improved.

Since the resin composition in the SMC of the first aspect contains the components (A) to (E1), it can be thickened and thermally cured. Further, the SMC of the first aspect containing a thickened product of this resin composition and a reinforcing fiber is excellent in storage stability and enables to obtain a fiber-reinforced composite material with less warpage.

Since the resin composition in the SMC of the second aspect contains the components (A) to (E2), it can be thickened and thermally cured. Further, the SMC of the second aspect containing a thickened product of this resin composition and a reinforcing fiber exhibits excellent heat resistance and mechanical properties when formed as a cured product.

The absolute value of a rate of change of an indentation hardness after 50 days of production with respect to an indentation hardness after 7 days of production may be 30% or less when allowed to stand at 23°C after production.

If the absolute value of the rate of change is 30% or less, the storage stability is excellent. The absolute value of the rate of change is preferably 20% or less, and particularly preferably 10% or less.

The lower limit of the absolute value of the rate of change is not particularly limited, and may be 0%.

The absolute value of the rate of change can be adjusted by the resin composition. For example, by using the resin composition in the SMC of the first aspect or the SMC of the second aspect, the absolute value of the rate of change can be set to 30% or less.

When the SMC of the invention is allowed to stand at 23°C after production, the indentation hardness after 7 days of production is preferably from 50 to 600, and more preferably from 80 to 550. If the indentation hardness after 7 days of production is equal to or more than the above lower limit value, the flowability at the time of molding of the SMC is further improved. If the indentation hardness after 7 days of production is equal to or less than the above upper limit value, the handling properties of the SMC are further improved.

The above indentation hardness can be adjusted by the viscosity of the resin composition, the content of the reinforcing fiber, and the like.

[Method for producing SMC]

The method for producing the SMC of the present invention is not particularly limited, and can be produced by a known method. For example, the SMC can be produced by preparing the resin composition of the first or second aspect, impregnating the resin composition into reinforcing fibers, and aging (thickening the resin composition) by holding the resultant for a certain period of time.

The method for preparing the resin composition is as described above. The impregnation of the resin composition into the reinforcing fibers can be carried out using a known SMC producing apparatus.

FIG. 1 is a schematic configuration view showing an example of an SMC producing apparatus 10.

The SMC producing apparatus 10 includes: a first feed roller 12 for feeding a first carrier film 102; a second feed roller 14 for feeding a second carrier film 104; a first doctor blade 16 for applying a resin composition 106 on the surface of the first carrier film 102; a second doctor blade 18 for applying a resin composition 108 on the surface of the second carrier film 104; a chopper 20 for cutting a reinforcing fiber bundle 110 and spreading cut short fiber bundles 112 on the resin composition 106 on the surface of the first carrier film 102; a plurality of impregnation roller pairs 22 where a laminated sheet 114 passes, which is obtained by superimposing the first carrier film 102 where the resin composition 106 is applied and the short fiber bundles 112 are deposited thereon and the first carrier film 102 where the resin composition 108 is applied, so that the short fiber bundles 112 and the resin composition 108 are brought into contact with each other; and a take-up roller 24 for taking up the laminated sheet 114 which has passed through the impregnation roller pair 22.

The production of SMCs using the SMC producing apparatus 10 is carried out as follows.

The resin composition 106 is uniformly applied to a predetermined thickness using the first doctor blade 16 on the surface of the first carrier film 102 supplied from the first feed roller 12.

A plurality of reinforcing fiber bundles 110 supplied from a plurality of bobbins (not shown) are cut by the chopper 20 and at the same time, the short fiber bundles 112 obtained by cutting the reinforcing fiber bundles 110 are spread and deposited in a sheet form on the resin composition 106 on the surface of the first carrier film 102.

The resin composition 108 is uniformly applied to a predetermined thickness using the second doctor blade 18 on the surface of the second carrier film 104 supplied from the second feed roller 14.

The first carrier film 102 on which the resin composition 106 is applied and the short fiber bundles 112 are deposited thereon in a two-dimensional random orientation, and the second carrier film 104 on which the resin composition 108 is applied are superimposed, so that the short fiber bundles 112 and the resin composition 108 are brought into contact with each other, thereby forming the laminated sheet 114.

A group of sheet-like short fiber bundles 112 is impregnated with the resin composition from above and below by causing the laminated sheet 114 to sequentially pass through the plurality of impregnation roller pairs 22.

The laminated sheet 114 which has passed through the impregnation roller pairs 22 is taken up by the take-up roller 24, and then the resultant is aged to thicken the resin composition, whereby an SMC is obtained.

The carrier films 102 and 104 are not particularly limited, and for example, a film made of polypropylene can be used.

Aging can be performed, for example, by holding the obtained laminated sheet 114 (SMC precursor) almost isothermally. While the laminated sheet 114 is held almost isothermally, the resin composition is thickened and becomes a thickened product. Here, the expression "almost isothermally" means that deflection of the holding temperature is ± 5°C or less.

The holding temperature and time can be appropriately set according to the type and amount of the thickener. Usually, the holding temperature is about 10 to 50°C, and the holding time is about several days to several tens of days (for example, from 7 to 50 days).

The resin composition after aging is preferably thickened to such an extent that the carrier films 102 and 104 can be easily peeled off.

[Fiber-reinforced composite material]

The fiber-reinforced composite material of the present invention is a molded body containing the above-mentioned cured product of the SMC of the present invention.

The fiber-reinforced composite material of the present invention may be, for example, a molded body having a partially different thickness, a molded body having a rib and/or a boss, or the like.

The fiber-reinforced composite material of the present invention may be composed of a cured product of the SMC of the present invention, or may be a combination of a member composed of the cured product of the SMC of the present invention and other members. For example, the fiber-reinforced composite material of the present invention may be a fiber-reinforced composite material produced by using the SMC of the present invention in combination with known materials other than the SMC, such as a prepreg and a nonwoven fabric. The fiber-reinforced composite material of the present invention may be, for example, a molded article or the like having a convex portion such as a rib and/or a boss formed using the SMC of the present invention, on a flat plate portion formed using a prepreg laminate obtained by laminating a plurality of known sheet-like prepregs.

The fiber-reinforced composite material of the present invention is also excellent in mechanical properties, and tends to be capable of maintaining excellent physical properties even in a high temperature atmosphere at around 80°C.

In the fiber-reinforced composite material of the present invention, a flexural strength of 250 MPa or more at 80°C can be achieved, and a flexural strength of 290 MPa or more at 80°C can also be achieved by appropriately selecting the constituent components of the resin composition of the SMC. Further, the rate of decrease of the flexural strength at 80°C with respect to the flexural strength at room temperature (25°C) can be set to 30% or less, and can also be set to 10% or less.

The flexural strength is measured by the method described in the Examples to be described later.

The rate of decrease of the flexural strength is obtained by the following formula.

Rate of decrease of flexural strength (%) = f ((flexural strength at 25°C) - (flexural strength at 80°C)) / (flexural strength at 25°C)} $\times$ 100

Further, in the fiber-reinforced composite material of the present invention, a glass transition temperature Tg of the SMC cured product constituting this of 165°C or more can be achieved, and excellent heat resistance can be exhibited. In addition, when the glass transition temperature Tg is 165°C or higher, the warpage tends to be reduced in a case where a carbon fiber is used as the reinforcing fiber of the fiber-reinforced composite material of the present invention.

The glass transition temperature Tg of the SMC cured product is preferably 170°C or higher, and more preferably 175°C or higher.

The glass transition temperature Tg of the SMC cured product is preferably 200°C or less, and more preferably 190°C or less, from the viewpoint of practical use such as the balance with the mechanical properties of the fiber-reinforced composite material.

The glass transition temperature Tg of the SMC cured product may be, for example, from 165 to 200°C, from 170 to 200°C, or from 175 to 190°C.

As described above, in order to increase the glass transition temperature Tg of the SMC cured product, it is preferable to use those having a high flash point as the component (E1) or component (E2) contained in the SMC, and more specifically, it is preferable to use a compound having a flash point of 80°C or higher.

The application of the fiber-reinforced composite material of the present invention is not particularly limited, and examples thereof include outer skins, interior materials and structural materials of automobiles, members for aircraft, members for construction, members for civil engineering, members for electrical equipment, and the like.

The fiber-reinforced composite material of the present invention can be produced by a production method comprising a step of subjecting the SMC of the present invention to heat and pressure molding.

As molding conditions in this step, for example, conditions for heat and pressure curing at a mold temperature of 140°C and a pressure of 8 MPa for 2 minutes, or conditions equivalent thereto (conditions for curing the SMC to the same level) can be mentioned.

In this step, when the SMC is filled and molded in a mold, it is preferable to make the temperature of the hottest portion of the mold lower than the glass transition temperature Tg of a cured product of the SMC which is determined by dynamic viscoelasticity measurement by 10°C or more, because the warpage of the fiber-reinforced composite material obtained as a cured product of the SMC using a carbon fiber as the reinforcing fiber tends to be reduced.

That is, when molding an SMC, it is preferable that a temperature $T_1$ (°C) of the hottest portion in the mold be 10°C or more lower than the glass transition temperature Tg (°C) of the SMC cured product, in other words, $T_1 \leq$ (Tg - 10).

In view of further bringing about the effect of preventing warpage, it is more preferable that $T_1 \leq$ (Tg - 15), and it is still more preferable that $T_1 \leq$ (Tg - 30).

For example, when the mold has an upper mold and a lower mold, one of the mold temperature of the upper mold and the mold temperature of the lower mold is made equal to or higher than the other, and the mold temperature $T_1$ of the mold having a higher temperature is made lower than the glass transition temperature Tg of the SMC cured product by 10°C or more.

From the viewpoint of sufficiently curing the SMC, $T_1$ is preferably 100°C or higher, more preferably 120°C or higher, and still more preferably 125°C or higher.

$T_1$ may be, for example, 100°C or more and (Tg - 10)°C or less, may be 120°C or more and (Tg - 15)°C or less, and may be 125°C or more and (Tg - 30)°C or less.

The pressure during molding is preferably from 3 to 15 MPa, and more preferably from 5 to 10 MPa.

If the temperature $T_1$ (molding temperature) of the hottest portion in the mold is sufficiently lower than the glass transition temperature Tg of the SMC cured product, the ambient temperature of a cured portion becomes lower than the glass transition temperature Tg of the SMC cured product when the SMC is cured. Therefore, the SMC cured product is less likely to be deformed later, and hardly warped.

On the other hand, when the mold temperature $T_1$ is equal to or higher than the glass transition temperature Tg of the SMC cured product, the shape of the SMC cured product cannot be fixed and becomes a state of being easily deformed even after the SMC is cured. If the SMC cured product is removed from the mold in this state, the SMC cured product is likely to be warped, because the deformation during removal or the deformation due to temperature drop after removal is likely to occur. In particular, when $T_1$ > (Tg - 10), warpage of the SMC cured product cannot be prevented in many cases.

[Examples]

Hereinafter, the present invention will be described in more detail with reference to examples. The term "parts" indicates "parts by mass".

(Reference Example 1)

<Preparation of resin paste>

65 parts of a t-butyl methacrylate monomer diluted product of a vinyl ester resin (epoxy (meth)acrylate resin) (CSVE / tBMA manufactured by Japan U-PICA Co., Ltd., resin concentration: 65% by mass), 35 parts of a t-butyl methacrylate monomer diluted product of an unsaturated polyester resin (DP-132 / tBMA, manufactured by Japan U-PICA Co., Ltd., resin concentration: 65% by mass), 0.5 parts of a 75% by mass solution of 1,1-di(t-butylperoxy) cyclohexane (product name: Perhexa C-75 (EB) manufactured by NOF Corporation) and 0.5 parts of a 74% by mass solution of t-butylperoxyisopropyl carbonate (product name: Kayacarbon BIC-75 manufactured by Kayaku Akzo Co., Ltd.) as polymerization initiators, 0.5 parts of a phosphoric acid ester derivative composition (product name: MOLD WIZ INT-EQ-6 manufactured by Axel Plastics Research Laboratories, Inc.) as an internal mold release agent, 20.0 parts of modified diphenylmethane diisocyanate (product name: Cosmonate LL manufactured by Mitsui Chemicals, Inc.) as a thickener, and 0.02 parts of 1,4-benzoquinone as a polymerization inhibitor were used, respectively. They were thoroughly mixed and stirred at room temperature (23°C) to obtain a paste-like resin composition for SMC (hereinafter also referred to as "resin paste").

In this resin paste, the content (resin solid content) of the component (A) was 65% by mass with respect to the total mass of the component (A) and a diluent monomer (an ethylenically unsaturated compound which was the component (E1), the component (E2) or a comparative product thereof).

<Production of SMC>

The resin paste was applied on a polyethylene film (carrier film) so as to have a thickness of 1.0 mm using a doctor blade at room temperature (23°C), and a carbon fiber bundle with 15,000 filaments (TR50S 15L manufactured by Mitsubishi Chemical Corporation) chopped to a length of 25 mm was spread thereon and deposited in the form of a sheet so that the basis weight of carbon fibers became substantially uniform and the directions of carbon fibers became random. Another carrier film made of polyethylene which was coated with the same resin paste to a thickness of 1.0 mm was superimposed thereon, so that the resin paste was brought into contact with the carbon fiber bundle, and was pressed by passing through between pairs of rollers, and a sheet-like carbon fiber bundle was impregnated with a resin paste from above and below to obtain an SMC precursor. The resin paste in the SMC precursor was sufficiently thickened by allowing the obtained SMC precursor to stand at room temperature (23°C) for 168 hours, thereby obtaining an SMC. In the obtained SMC, the carbon fiber bundle was impregnated with the resin paste in a favorable manner. The content of the carbon fiber with respect to the total mass of the SMC was 54% by mass.

<Production of molded plate>

The obtained SMC was charged into a molding mold at a charge rate (ratio of the area of SMC with respect to the mold area) of 65%, and subjected to heat and pressure curing for 2 minutes under conditions of a mold temperature of 140°C and a pressure of 8 MPa to obtain a 2 mm thick and 300 mm square molded plate having a flat plate shape (a carbon fiber-reinforced composite material composed of an SMC cured product). It should be noted that the mold temperature is the temperature of a portion having the highest temperature in the mold.

<Measurement of viscosity of resin paste and rate of increase>

The obtained resin paste was allowed to stand at 23°C, and the viscosity (Pa·s) of the resin paste at 23°C was measured after 7 days of production and after 50 days of production using a B-type viscometer manufactured by Brookfield Engineering Laboratories, Inc. From the measurement results, the rate of increase of the viscosity after 50 days of production with respect to the viscosity after 7 days of production was calculated by the following formula. In addition, the rate of increase per day (%/day) was calculated from the obtained rate of increase (%). The results are shown in Table 1.

Rate of increase (%) = {((viscosity after 50 days of production) - (viscosity after 7 days of production)) / (viscosity after 7 days of production)} $\times$ 100

<Evaluation of impregnation properties>

When the resin paste was impregnated into the carbon fiber bundle to obtain an SMC precursor in the production of the SMC, the impregnation properties were evaluated by visual observation and the sense of touch. The evaluation criteria are as follows. The results are shown in Table 1.

A: The resin paste is sufficiently impregnated into the carbon fiber bundle.
B: Partially, the resin paste is not impregnated into the carbon fiber bundle.

<Measurement of indentation hardness of SMC and rate of change>

The obtained SMC was allowed to stand at 23°C, and the indentation hardness was measured by the following method after 7 days of production and after 50 days of production. The results are shown in Table 1.
Equipment used: indentation hardness tester (gauge sensor GS-503, indenter diameter: $\varphi$ 27 mm) manufactured by Tokai Seiki Co., Ltd.

(1) The SMC was cut into eight sheets having a reference size of 70 mm (width direction) $\times$ 70 mm (length direction), and they were superimposed while peeling off the polyethylene carrier film to obtain a test piece. However, only the top and bottom carrier films were not peeled off.
(2) The test piece was sealed and left to stand at 25 $\pm$ 5°C for 12 hours or more and 24 hours or less.
(3) Using the indentation hardness tester, a load of 10 kg was applied for 30 seconds with an indenter to the test piece in a state where the carrier films were attached on both sides under the condition of 25 $\pm$ 5°C and a load of 17.5 kg was further applied continuously for 90 seconds, and a total indentation depth L (mm) was measured.
(4) The indentation hardness was calculated using the following formula. The measurement was performed at three points on the test piece, and a calculated average of indentation hardness values at the three points was taken as the indentation hardness of the SMC.

$$(\text{Indentation hardness}) = L\,(\text{mm}) \times 100$$

From the measurement results, the rate of change of the indentation hardness after 50 days of production with respect to the indentation hardness after 7 days of production was calculated by the following formula. In addition, the rate of change per day (%/day) was calculated from the obtained rate of change (%). The results are shown in Table 1.

Rate of change (%) = {((indentation hardness after 7 days of production) - (indentation hardness after 50 days of production)) / (indentation hardness after 7 days of production)} $\times$ 100

<Flexural test>

Among the obtained molded plates, flexural test pieces having a length of 60 mm and a width of 25 mm were cut out from those which could be molded without any problems. Using a 5 kN Instron universal testing machine, a three-point flexural strength / flexural modulus test was conducted at a crosshead speed of 1.4 mm/min with L/D = 16 to measure the flexural strength and the flexural modulus at room temperature (25°C) or 80°C. The number of test pieces measured was 6, and the average values were taken as the flexural strength and flexural modulus of the molded plate, respectively. The higher the flexural strength and the flexural modulus, the better the mechanical strength.

(Reference Example 2)

A resin paste was obtained to produce an SMC and a molded plate in the same manner as in Reference Example 1, except that the monomer for diluting the vinyl ester resin and the unsaturated polyester resin was changed to cyclohexyl methacrylate (CHMA), and the resin solid content, the number of parts of the thickener, and the number of parts of the polymerization inhibitor were changed as shown in Table 1. Further, the measurement of viscosity of resin paste and rate of increase, the evaluation of impregnation properties, the measurement of indentation hardness of SMC and rate of change, and the flexural test were performed in the same manner as in Reference Example 1. The results are shown in Table 1.

(Example 3)

A resin paste was obtained to produce an SMC and a molded plate in the same manner as in Reference Example 1, except that the monomer for diluting the vinyl ester resin and the unsaturated polyester resin was changed to isobornyl methacrylate (IBXMA), and the resin solid content, the number of parts of the thickener, and the number of parts of the polymerization inhibitor were changed as shown in Table 1. Further, the measurement of viscosity of resin paste and rate of increase, the evaluation of impregnation properties, the measurement of indentation hardness of SMC and rate of change, and the flexural test were performed in the same manner as in Reference Example 1. The results are shown in Table 1.

(Example 4)

A resin paste was obtained in the same manner as in Example 3, except that 100 parts of an IBXMA diluted product of the vinyl ester resin were used, an IBXMA diluted product of the unsaturated polyester resin was not used, and the number of parts of the thickener was changed as shown in Table 1. Further, the viscosity of the resin paste and the rate of increase were measured in the same manner as in Reference Example 1. The results are shown in Table 1.

(Reference Example 5)

A resin paste was obtained in the same manner as in Reference Example 2, except that the monomer for diluting the vinyl ester resin and the unsaturated polyester resin was changed to ethylene glycol dimethacrylate (EDMA), and the number of parts of the thickener was changed as shown in Table 1. Further, the viscosity of the resin paste and the rate of increase were measured in the same manner as in Reference Example 1. The results are shown in Table 1.

(Reference Example 6)

A resin paste was obtained in the same manner as in Reference Example 5, except that the number of parts of the thickener was changed as shown in Table 1. Further, the viscosity of the resin paste and the rate of increase were measured in the same manner as in Reference Example 1. The results are shown in Table 1.

(Example 7)

A resin paste was obtained to produce an SMC and a molded plate in the same manner as in Example 3, except that the amounts of the IBXMA diluted product of vinyl ester resin and the IBXMA diluted product of unsaturated polyester resin were changed to 85 parts and 15 parts, respectively, and the resin solid content, the number of parts of the thickener, and the number of parts of the polymerization inhibitor were changed as shown in Table 2. Further, the measurement of viscosity of resin paste and rate of increase, the evaluation of impregnation properties, the measurement of indentation hardness of SMC and rate of change, and the flexural test were performed in the same manner as in Reference Example 1. The results are shown in Table 2.

(Example 8)

A resin paste was obtained to produce an SMC and a molded plate in the same manner as in Example 4, except that the vinyl ester resin in Example 4 was changed to EBECRYL 600 manufactured by Daicel-Allnex Ltd., and the resin solid content, the number of parts of the thickener, and the number of parts of the polymerization inhibitor were changed as shown in Table 2. Further, the measurement of viscosity of resin paste and rate of increase, the evaluation of impregnation properties, the measurement of indentation hardness of SMC and rate of change, and the flexural test were performed in the same manner as in Reference Example 1. The results are shown in Table 2.

(Reference Example 9)

A resin paste was obtained to produce an SMC and a molded plate in the same manner as in Example 8, except that the monomer for diluting the vinyl ester resin was changed to tetrahydrofurfuryl methacrylate (THFMA), and the number of parts of the thickener was changed as shown in Table 2. Further, the measurement of viscosity of resin paste and rate of increase, the evaluation of impregnation properties, the measurement of indentation hardness of SMC and rate of change, and the flexural test were performed in the same manner as in Reference Example 1. The results are shown in Table 2.

(Reference Example 10)

A resin paste was obtained to produce an SMC and a molded plate in the same manner as in Example 8, except that the monomer for diluting the vinyl ester resin was changed to benzyl methacrylate (BzMA), and the number of parts of the thickener was changed as shown in Table 2. Further, the measurement of viscosity of resin paste and rate of increase, the evaluation of impregnation properties, the measurement of indentation hardness of SMC and rate of change, and the flexural test were performed in the same manner as in Example 1. The results are shown in Table 2.

(Reference Example 11)

A resin paste was obtained to produce an SMC and a molded plate in the same manner as in Reference Example 1, except that the monomer for diluting the vinyl ester resin and the unsaturated polyester resin was changed to a styrene monomer, and the resin solid content, the number of parts of the thickener, and the number of parts of the polymerization inhibitor were changed as shown in Table 2. Further, the measurement of viscosity of resin paste and rate of increase, the evaluation of impregnation properties, the measurement of indentation hardness of SMC and rate of change, and the flexural test were performed in the same manner as in Reference Example 1. The results are shown in Table 2.

[Table 1]

|  | Ref. | Ref. Ex. | Ex. 3 | Ex. 4 | Ref. Ex. | Ref. Ex. |
|---|---|---|---|---|---|---|
|  | Ex. 1 | 2 |  |  | 5 | 6 |
| Mixture of vinyl ester resin and diluent monomer (parts) | 65 | 65 | 65 | 100 | 65 | 65 |
| Mixture of unsaturated polyester resin and diluent monomer (parts) | 35 | 35 | 35 | - | 35 | 35 |

(continued)

| | | Ref. Ex. 1 | Ref. Ex. 2 | Ex. 3 | Ex. 4 | Ref. Ex. 5 | Ref. Ex. 6 |
|---|---|---|---|---|---|---|---|
| Diluent monomer (ethylenically unsaturated compound) | | tBMA | CHMA | IBXMA | IBXMA | EDMA | EDMA |
| Number of ethylenically unsaturated groups per molecule of diluent monomer | | 1 | 1 | 1 | 1 | 2 | 2 |
| Resin solid content (% by mass) | | 65 | 60 | 50 | 50 | 60 | 60 |
| Number of parts of thickener (with respect to 100 parts of resin solution) | | 20.0 | 20.5 | 15.5 | 18.0 | 21.0 | 22.0 |
| Number of parts of thickener (with respect to 100 parts of resin solid content) | | 30.8 | 34.2 | 31.0 | 36.0 | 35.0 | 36.7 |
| Number of parts of polymerization inhibitor (with respect to 100 parts of resin solid content) | | 0.031 | 0.033 | 0.040 | 0.040 | 0.033 | 0.033 |
| Resin paste viscosity | After 7 days (Pa·s) | $1.34 \times 10^4$ | $8.48 \times 10^3$ | $1.22 \times 10^4$ | $5.30 \times 10^4$ | $5.76 \times 10^3$ | $3.64 \times 10^4$ |
| | After 50 days (Pa·s) | $1.40 \times 10^4$ | $1.18 \times 10^4$ | $1.23 \times 10^4$ | $5.54 \times 10^4$ | $1.05 \times 10^4$ | $7.04 \times 10^4$ |
| | Rate of increase after 50 days with respect to after 7 days | 4.5 | 39.6 | 1.0 | 4.5 | 81.9 | 93.4 |
| | Rate of increase (%/day) | 0.10 | 0.92 | 0.02 | 0.11 | 1.91 | 2.17 |
| Carbon fiber cut length (mm) | | 25 | 25 | 25 | - | - | - |
| Content of carbon fiber (% by mass) | | 54 | 55 | 54 | - | - | - |
| Impregnation properties | | A | A | A | - | - | - |
| Indentation hardness | After 7 days | 355 | 412 | 353 | - | - | - |
| | After 50 days | 401 | 422 | 365 | - | - | - |
| | Rate of change of after 50 days with respect to after 7 days | -12.8 | -2.6 | -3.3 | - | - | - |
| | Rate of change (%/day) | -0.30 | -0.06 | -0.08 | - | - | - |
| Flexural test | Flexural strength room temperature (MPa) | 359.3 | 374.3 | 320.0 | - | - | - |
| | Flexural modulus room temperature (GPa) | 26.7 | 26.3 | 24.9 | - | - | - |
| | Flexural strength 80°C (MPa) | 290.5 | 277.0 | 293.4 | - | - | - |
| | Flexural modulus 80°C (GPa) | 22.8 | 21.2 | 22.6 | - | - | - |

[Table 2]

| | | Ex. 7 | Ex. 8 | Ref. Ex. 9 | Ref. Ex. 10 | Ref. Ex. 11 |
|---|---|---|---|---|---|---|
| Mixture of vinyl ester resin and diluent monomer (parts) | | 85 | 100 | 100 | 100 | 65 |
| Mixture of unsaturated polyester resin and diluent monomer (parts) | | 15 | - | - | - | 35 |
| Diluent monomer (ethylenically unsaturated compound) | | IBXMA | IBXMA | THFMA | BzMA | Styrene |
| Number of ethylenically unsaturated groups per molecule of diluent monomer | | 1 | 1 | 1 | 1 | 1 |
| Resin solid content (% by mass) | | 38.5 | 35 | 35 | 35 | 67 |
| Number of parts of thickener (with respect to 100 parts of resin solution) | | 13.5 | 12.0 | 16.5 | 15.5 | 22.3 |
| Number of parts of thickener (with respect to 100 parts of resin solid content) | | 35.1 | 34.3 | 47.1 | 44.3 | 33.3 |
| Number of parts of polymerization inhibitor (with respect to 100 parts of resin solid content) | | 0.078 | 0.086 | 0.086 | 0.086 | 0.030 |
| Resin paste viscosity | After 7 days (Pa·s) | $1.95 \times 10^4$ | $9.10 \times 10^4$ | $1.70 \times 10^4$ | $2.29 \times 10^4$ | $2.48 \times 10^4$ |
| | After 50 days (Pa·s) | $3.40 \times 10^4$ | $1.11 \times 10^5$ | $2.67 \times 10^4$ | $2.81 \times 10^4$ | $6.82 \times 10^4$ |
| | Rate of increase after 50 days with respect to after 7 days | 74.4 | 22.0 | 57.1 | 22.7 | 174.8 |
| | Rate of increase (%/day) | 1.73 | 0.51 | 1.33 | 0.53 | 4.07 |
| Carbon fiber cut length (mm) | | 25 | 25 | 25 | 25 | 25 |
| Content of carbon fiber (% by mass) | | 55 | 51 | 51 | 52 | 53 |
| Impregnation properties | | A | A | A | A | A |
| Indentation hardness | After 7 days | 244 | 139 | 84 | 107 | 421 |
| | After 50 days | 197 | 118 | 67 | 130 | 262 |
| | Rate of change after 50 days with respect to after 7 days | 19.3 | 15.3 | 21.0 | -21.1 | 37.7 |
| | Rate of change (%/day) | 0.45 | 0.35 | 0.49 | -0.49 | 0.88 |
| Flexural test | Flexural strength room temperature (MPa) | 338 | 262.7 | 292.4 | 313.1 | 346.0 |
| | Flexural modulus room temperature (GPa) | 26.6 | 22.2 | 23.9 | 25 | 26.1 |
| | Flexural strength 80°C (MPa) | - | 253.7 | 250.8 | 281.9 | 280.2 |
| | Flexural modulus 80°C (GPa) | - | 20.9 | 21.3 | 23 | 23.9 |

In Tables 1 and 2, the term "resin solution" indicates a mixture of the component (A) and a diluent monomer.

The resin pastes in Reference Examples 1, 2, 5, 6, and 9 to 11 and in Examples 3, 4, 7 and 8 had rates of increase of the viscosity after 50 days of production with respect to the viscosity after 7 days of production of 100% or less.

The SMCs of Reference Examples 1, 2, 9 and 10 and Examples 3, 7 and 8 had absolute values of rates of change of the indentation hardness after 50 days of production with respect to the indentation hardness after 7 days of production of 30% or less, and were excellent in storage stability.

The cured products (molded plates) of the SMCs of Reference Examples 1, 2, and 9 to 11 and Example 3 were excellent in mechanical properties.

(Example 12)

[Preparation of resin composition for SMC]

The following component (A), component (B), component (C), component (D), diluent monomer and other components are sufficiently mixed and stirred at room temperature (23°C) to obtain a paste-like resin composition for SMC.

- Component (A) and diluent monomer: 85 parts of an isobornyl methacrylate (IBXMA)-diluted product of a vinyl ester resin (epoxy (meth)acrylate resin) (CSVE / IBXMA, manufactured by Japan U-PICA Co., Ltd., resin concentration: 65% by mass), and 15 parts of an isobornyl methacrylate (IBXMA)-diluted product of an unsaturated polyester resin (DP-132 / IBXMA, manufactured by Japan U-PICA Co., Ltd., resin concentration: 65% by mass).
- Component (B): 20.0 parts of modified diphenylmethane diisocyanate (product name: COSMONATE LL, manufactured by Mitsui Chemicals, Inc.).
- Component (C): 0.5 parts of a 75% by mass solution of 1,1-di(t-butylperoxy) cyclohexane (product name: Perhexa C-75 (EB), manufactured by NOF Corporation), and 0.5 parts of a 74% by mass solution of t-butyl peroxyisopropyl carbonate (product name: Kayacarbon BIC-75, manufactured by Kayaku Akzo Co., Ltd.).
- Component (D): 0.02 parts of 1,4-benzoquinone.
- Other components: 0.5 parts of a phosphoric acid ester derivative composition serving as an internal mold release agent (product name: MOLD WIZ INT-EQ-6, manufactured by Axel Plastics Research Laboratories, Inc.).

In the obtained resin composition for SMC, the content (resin solid content) of the component (A) was 50% by mass with respect to the total mass of the component (A) and a diluent monomer (an ethylenically unsaturated compound which was the component (E1), the component (E2) or a comparative product thereof). It should be noted that the content of the component (A) was also 50% by mass in the resin compositions for SMC of the following examples and comparative examples.

[Production of SMC]

The resin composition for SMC was applied onto a carrier film composed of a polyethylene film at a room temperature (23°C) using a doctor blade so as to have a thickness of 1.0 mm to obtain a sheet for SMC production. Two sheets for SMC production were prepared. One of the two manufactured sheets for SMC production will be referred to as a "first sheet for SMC production", and the other will be referred to as a "second sheet for SMC production".

Short fiber bundles obtained by cutting a carbon fiber bundle having 15,000 filaments (TR50S 15L, manufactured by Mitsubishi Chemical Corporation) into a length of 25 mm were spread and deposited in the form of a sheet on the coating film of the resin composition for SMC in the first sheet for SMC production. At this time, the short fiber bundles were spread so that the basis weight of the carbon fibers became substantially uniform, and the directions of the carbon fibers became random.

Then, a coating film of the SMC resin composition in the second sheet for SMC production was superimposed on the spread short fiber bundles. As a result, a laminate in which a short fiber bundle of carbon fibers was sandwiched between a pair of sheets for SMC production was obtained. The laminate was pressed by being passed through between a pair of rollers, and the sheet-like carbon fiber bundle was impregnated with the resin composition for SMC to obtain an SMC precursor.

The resin composition for SMC in the SMC precursor was sufficiently thickened by allowing the obtained SMC precursor to stand at room temperature (23°C) for 168 hours, thereby obtaining an SMC.

In the obtained SMC, the carbon fiber bundle was sufficiently impregnated with the resin composition for SMC. The content of the carbon fiber with respect to the total mass of the SMC was 54% by mass.

[Production of SMC cured product]

The obtained SMC was filled into a molding mold at a charge rate (ratio of the area of SMC with respect to the mold area) of 65%. The SMC filled in the mold was heated, pressurized and cured for 3 minutes under conditions of a mold temperature of 140°C and a pressure of 8 MPa to obtain a 2 mm thick and 300 mm square SMC cured product having a flat plate shape (a carbon fiber-reinforced composite material). It should be noted that the mold temperature is the temperature of a portion having the highest temperature in the mold.

(Example 13)

An SMC cured product was obtained in the same manner as in Example 12, except that the component (A) and the component (E) were changed to 100 parts of an isobornyl methacrylate (IBXMA)-diluted product of a vinyl ester resin (epoxy (meth)acrylate resin) (CSVE / IBXMA, manufactured by Japan U-PICA Co., Ltd.).

(Example 14)

An SMC cured product was obtained in the same manner as in Example 12, except that in the production of SMC, the type of carbon fiber used was changed to a carbon fiber bundle having 3,000 filaments (TR50S 3L, manufactured by Mitsubishi Chemical Corporation).

(Reference Example 15)

An SMC cured product was obtained in the same manner as in Example 12, except that the monomer for diluting the vinyl ester resin and the unsaturated polyester resin was changed to a t-butyl methacrylate monomer (tBMA).

(Example 16)

An SMC cured product was obtained in the same manner as in Example 12, except that the mold temperature at the time of production of the SMC cured product was 170°C and the curing time was 2 minutes.

<Evaluation>

With regard to the SMC cured products of Reference Example 15 and Examples 12 to 14 and Example 16, the glass transition temperature Tg was measured and the anti-warping property was evaluated as follows. The results are shown in Table 3.

[Measurement of glass transition temperature Tg]

A test piece of 57 mm in length and 12.7 mm in width was produced from the SMC cured product having a thickness of 2 mm.
The loss modulus and the storage modulus were measured for the produced test piece using a dynamic viscoelasticity measuring device (DMA Q800 manufactured by TA Instruments Inc.) while changing the measurement temperature. The temperature at which Tan6 represented by the ratio of loss modulus to storage modulus (loss modulus / storage modulus) indicates a peak was taken as the glass transition temperature Tg.
It should be noted that the measurement conditions in the dynamic viscoelasticity measurement are as follows.

Rate of temperature increase: 5°C / min
Span between chucks: 35 mm
Strain: 0.005
Frequency: 1 Hz

[Evaluation of anti-warping property]

The obtained plate-like SMC cured product was placed on three supporting points so that the center of gravity of the supporting points was at the center of the SMC cured product, and the shape was measured using a three-dimensional shape measuring device (ScanArm manufactured by FARO Technologies, Inc.). Thereafter, the Z coordinate (height) at the center of the SMC cured product in the X-Y plane was corrected to be 0, and Z coordinates at a total of 25 points were measured at intervals of 7 cm from the center both along the X coordinate and the Y coordinate. The difference between the minimum value and the maximum value was calculated for the Z coordinates measured at 25 points. The difference was calculated for three SMC cured products, and their average was obtained as a warpage height. The warpage height was evaluated based on the following criteria. The smaller the warpage height, the better the anti-warping property.

A: Warpage height of 0 mm or more and less than 4 mm.

B: Warpage height of 4 mm or more and less than 6 mm.

C: Warpage height of 6 mm or more.

[Table 3]

|  |  | Ex. 12 | Ex. 13 | Ex. 14 | Ref. Ex. 15 | Ex. 16 |
|---|---|---|---|---|---|---|
| Mixture of vinyl ester resin (component (A)) and diluent monomer | Parts | 85 | 100 | 85 | 65 | 85 |
| Mixture of vinyl ester resin (component (A)) and diluent monomer | Parts | 15 | - | 15 | 35 | 15 |
| Diluent monomer (ethylenically unsaturated compound) | - | IBXMA | IBXMA | IBXMA | tBMA | IBXMA |
| Flash point of diluent monomer | °C | 120 | 120 | 120 | 29.5 | 120 |
| Homopolymer Tg of diluent monomer | °C | 155 | 155 | 155 | 107 | 155 |
| Number of filaments in carbon fiber bundle | Filaments | 15,000 | 15,000 | 3,000 | 15,000 | 15,000 |
| Content of carbon fiber in SMC | % by mass | 54 | 54 | 54 | 54 | 54 |
| Mold temperature during molding | °C | 140 | 140 | 140 | 140 | 170 |
| Glass transition temperature Tg of SMC cured product | °C | 175 | 182 | 175 | 130 | 175 |
| Warpage height | mm | 3.8 | 3.8 | 2.5 | 5.5 | 5.5 |
|  | Judgement | A | A | A | B | B |

<Results>

The SMC cured products of Examples 12 to 14 were particularly excellent in anti-warping property.
The SMC cured products of Reference Example 15 and Example 16 were somewhat inferior in anti-warping property, but at a practical level.

[Industrial Applicability]

According to the present invention, it is possible to provide an SMC excellent in storage stability. Due to the excellent storage stability of the SMC, even when the time until the SMC is used, after production, for producing a fiber-reinforced composite material varies, variations in the moldability of SMC, the quality of the obtained fiber-reinforced composite material, and the like are less likely to occur.
Moreover, according to the present invention, it is possible to provide a fiber-reinforced composite material excellent in heat resistance and mechanical properties.
Furthermore, according to the present invention, it is possible to provide a fiber-reinforced composite material in which warpage is sufficiently prevented, and a method for producing the same.

[Reference Signs List]

10: SMC producing apparatus;
12: First feed roller;
14: Second feed roller;
16: First doctor blade;
18: Second doctor blade;
20: Chopper;
22: Impregnation roller pair;
24: Take-up roller;
102: First carrier film;

104: Second carrier film;
106: Resin composition;
108: Resin composition;
110: Reinforcing fiber bundle;
112: Short fiber bundle;
114: Laminated sheet.

**Claims**

1. A sheet molding compound comprising:

   a thickened product of a resin composition comprising a vinyl ester resin, a thickener, a polymerization initiator, a polymerization inhibitor and isobornyl methacrylate; and
   a reinforcing fiber.

2. The sheet molding compound according to Claim 1, wherein a content of said polymerization inhibitor is from 0.01 to 1.0% by mass with respect to a total mass of said vinyl ester resin and an unsaturated polyester resin which is optionally comprised in said resin composition.

3. The sheet molding compound according to Claim 1 or 2, wherein said polymerization initiator comprises a compound having a 10-hour half-life temperature of from 70 to 120°C.

4. The sheet molding compound according to any one of Claims 1 to 3, wherein when said resin composition is allowed to stand at 23°C after production, a rate of increase of a viscosity after 50 days of production with respect to a viscosity after 7 days
   1 of production of said resin composition is 100% or less.

5. The sheet molding compound according to any one of Claims 1 to 4, wherein an absolute value of a rate of change of an indentation hardness after 50 days of production with respect to an indentation hardness after 7 days of production is 30% or less when allowed to stand at 23°C after production.

6. The sheet molding compound according to any one of Claims 1 to 5, wherein said reinforcing fiber comprises a carbon fiber.

7. The sheet molding compound according to any one of Claims 1 to 6, wherein a cured product of said sheet molding compound has a glass transition temperature Tg of 165°C or higher as determined by the method in the description under the heading "Measurement of glass transition temperature Tg".

8. The sheet molding compound according to any one of Claims 1 to 7, wherein a cured product of said sheet molding compound has a flexural strength at 80°C of 250 MPa or more as determined by the method in the description under the heading "Flexural test".

9. The sheet molding compound according to any one of Claims 1 to 8, wherein a cured product of said sheet molding compound has a rate of decrease of a flexural strength at 80°C with respect to a flexural strength at 25°C of 30% or less, wherein flexural strength is determined by the method in the description under the heading "Flexural test".

10. A fiber-reinforced composite material comprising a cured product of the sheet molding compound according to any one of Claims 1 to 9.

11. The fiber-reinforced composite material according to Claim 10, wherein a glass transition temperature Tg of the cured product of said sheet molding compound is 165°C or higher as determined by the method in the description under the heading "Measurement of glass transition temperature Tg".

12. The fiber-reinforced composite material according to Claim 10 or 11, which has a flexural strength at 80°C of 250 MPa or more as determined by the method in the description under the heading "Flexural test".

13. The fiber-reinforced composite material according to any one of Claims 10 to 12, wherein a rate of decrease of a flexural strength at 80°C with respect to a flexural strength at 25°C is 30% or less, wherein flexural strength is determined by the method in the description under the heading "Flexural test".

14. A method for producing a fiber-reinforced composite material, the method comprising a step of filling and molding the sheet molding compound according to any one of Claims 1 to 9 in a mold,
wherein a temperature of the hottest portion of said mold is made lower than a glass transition temperature Tg of a cured product of said sheet molding compound by 10°C or more when said sheet molding compound is molded, wherein glass transition temperature Tg is determined by the method in the description under the heading "Measurement of glass transition temperature Tg".


**Patentansprüche**

1. Harzmatte, umfassend:

   ein verdicktes Produkt einer Harzzusammensetzung, umfassend ein Vinylesterharz, ein Verdickungsmittel, einen Polymerisationsinitiator, einen Polymerisationsinhibitor und Isobornylmethacrylat, und
   eine Verstärkungsfaser.

2. Harzmatte gemäß Anspruch 1, wobei ein Gehalt des Polymerisationsinihibitors 0,01 bis 1,0 Masse-% in Bezug auf eine Gesamtmasse des Vinylesterharzes und eines ungesättigten Polyesterharzes, das optional in der Harzzusammensetzung enthalten ist, beträgt.

3. Harzmatte gemäß Anspruch 1 oder 2, wobei der Polymerisationsinitiator eine Verbindung mit einer 10-stündigen Halbwertszeittemperatur von 70 bis 120°C umfasst.

4. Harzmatte gemäß einem der Ansprüche 1 bis 3, wobei, wenn die Harzzusammensetzung nach der Herstellung bei 23°C stehengelassen wird, eine Anstiegsrate einer Viskosität 50 Tage nach Herstellung in Bezug auf eine Viskosität 7 Tage nach Herstellung der Harzzusammensetzung 100 % oder weniger beträgt.

5. Harzmatte gemäß einem der Ansprüche 1 bis 4, wobei ein absoluter Wert einer Änderungsrate einer Eindruckshärte 50 Tage nach Herstellung in Bezug auf eine Eindruckshärte 7 Tage nach Herstellung 30 % oder weniger beträgt, wenn sie bei 23°C nach der Herstellung stehengelassen wird.

6. Harzmatte gemäß einem der Ansprüche 1 bis 5, wobei die Verstärkungsfaser eine Kohlenstofffaser umfasst.

7. Harzmatte gemäß einem der Ansprüche 1 bis 6, wobei ein gehärtetes Produkt der Harzmatte eine Glasübergangstemperatur Tg von 165°C oder höher, bestimmt durch das Verfahren in der Beschreibung unter der Überschrift "Messung der Glasübergangstemperatur Tg", aufweist.

8. Harzmatte gemäß einem der Ansprüche 1 bis 7, wobei ein gehärtetes Produkt der Harzmatte eine Biegefestigkeit bei 80°C von 250 MPa oder mehr, bestimmt durch das Verfahren in der Beschreibung unter der Überschrift "Biegetest", aufweist.

9. Harzmatte gemäß einem der Ansprüche 1 bis 8, wobei ein gehärtetes Produkt der Harzmatte eine Abnahmerate einer Biegefestigkeit bei 80°C in Bezug auf eine Biegefestigkeit bei 25°C von 30 % oder weniger aufweist, wobei die Biegefestigkeit durch das Verfahren in der Beschreibung unter der Überschrift "Biegetest" bestimmt wird.

10. Faserverstärktes Verbundmaterial, umfassend ein gehärtetes Produkt der Harzmatte gemäß einem der Ansprüche 1 bis 9.

11. Faserverstärktes Verbundmaterial gemäß Anspruch 10, wobei eine Glasübergangstemperatur Tg des gehärteten Produkts der Harzmatte, bestimmt durch das Verfahren in der Beschreibung unter der Überschrift "Messung der Glasübergangstemperatur Tg", 165°C oder höher ist.

12. Faserverstärktes Verbundmaterial gemäß Anspruch 10 oder 11, das eine Biegefestigkeit bei 80°C von 250 MPa oder mehr, bestimmt durch das Verfahren in der Beschreibung unter der Überschrift "Biegetest", aufweist.

**13.** Faserverstärktes Verbundmaterial gemäß einem der Ansprüche 10 bis 12, wobei eine Abnahmerate einer Biegefestigkeit bei 80°C in Bezug auf eine Biegefestigkeit bei 25°C 30 % oder weniger beträgt, wobei die Biegefestigkeit durch das Verfahren in der Beschreibung unter der Überschrift "Biegetest" bestimmt wird.

**14.** Verfahren zur Herstellung eines faserverstärkten Verbundmaterials, wobei das Verfahren einen Schritt zum Einfüllen der Harzmatte gemäß einem der Ansprüche 1 bis 9 in eine Form und Formen darin umfasst, wobei die Temperatur des heißesten Abschnitts der Form um 10°C oder mehr niedriger als eine Glasübergangstemperatur Tg eines gehärteten Produkts der Harzmatte erhalten wird, wenn die Harzmatte geformt wird, wobei die Glasübergangstemperatur Tg durch das Verfahren in der Beschreibung unter der Überschrift "Messung der Glasübergangstemperatur Tg" bestimmt wird.

**Revendications**

**1.** Composé pour moulage de feuille comprenant :

un produit épaissi d'une composition de résine comprenant une résine d'ester de vinyle, un épaississant, un initiateur de polymérisation, un inhibiteur de polymérisation et du méthacrylate d'isobornyle ; et une fibre de renfort.

**2.** Composé pour moulage de feuille selon la revendication 1, dans lequel une teneur dudit inhibiteur de polymérisation est de 0,01 à 1,0 % en masse par rapport à une masse totale de ladite résine d'ester de vinyle et d'une résine de polyester insaturé qui est facultativement comprise dans ladite composition de résine.

**3.** Composé pour moulage de feuille selon la revendication 1 ou la revendication 2, dans lequel ledit initiateur de polymérisation comprend un composé le fait de présenter une température de demi-vie de 10 heures allant de 70 à 120 °C.

**4.** Composé pour moulage de feuille selon l'une quelconque des revendications 1 à 3, dans lequel lorsque ladite composition de résine est laissée au repos à 23 °C après la production, un taux d'augmentation d'une viscosité après 50 jours de production par rapport à une viscosité après 7 jours de production de ladite composition de résine est de 100 % ou moins.

**5.** Composé pour moulage de feuille selon l'une quelconque des revendications 1 à 4, dans lequel une valeur absolue d'un taux de changement d'une dureté d'indentation après 50 jours de production par rapport à une dureté d'indentation après 7 jours de production est de 30 % ou moins lorsqu'elle est laissée au repos à 23 °C après la production.

**6.** Composé pour moulage de feuille selon l'une quelconque des revendications 1 à 5, dans lequel ladite fibre de renfort comprend une fibre de carbone.

**7.** Composé pour moulage de feuille selon l'une quelconque des revendications 1 à 6, dans lequel un produit durci dudit composé pour moulage de feuille présente une température de transition vitreuse Tg de 165 °C ou supérieure telle que déterminée par le procédé dans la description sous le titre « Mesure de la température de transition vitreuse Tg » (« Measurement of glass transition temperature Tg »).

**8.** Composé pour moulage de feuille selon l'une quelconque des revendications 1 à 7, dans lequel un produit durci dudit composé pour moulage de feuille présente une résistance à la flexion à 80 °C de 250 MPa ou plus telle que déterminée par le procédé dans la description sous le titre « Essai de flexion » (« Flexural test »).

**9.** Composé pour moulage de feuille selon l'une quelconque des revendications 1 à 8, dans lequel un produit durci dudit composé pour moulage de feuille présente un taux de diminution d'une résistance à la flexion à 80 °C par rapport à une résistance à la flexion à 25 °C de 30 % ou moins, dans lequel la résistance à la flexion est déterminée par le procédé dans la description sous le titre « Essai de flexion » (« Flexural test »).

**10.** Matériau composite renforcé par des fibres comprenant un produit durci du composé pour moulage de feuille selon l'une quelconque des revendications 1 à 9.

**11.** Matériau composite renforcé par des fibres selon la revendication 10, dans lequel une température de transition vitreuse Tg du produit durci dudit composé pour moulage de feuille est de 165 °C ou supérieure telle que déterminée par le procédé dans la description sous le titre « Mesure de la température de transition vitreuse Tg » (« Measurement of glass transition temperature Tg »).

12. Matériau composite renforcé par des fibres selon la revendication 10 ou la revendication 11, qui présente une résistance à la flexion à 80 °C de 250 MPa ou plus telle que déterminée par le procédé dans la description sous le titre « Essai de flexion » (« Flexural test »).

13. Matériau composite renforcé par des fibres selon l'une quelconque des revendications 10 à 12, dans lequel un taux de diminution d'une résistance à la flexion à 80 °C par rapport à une résistance à la flexion à 25 °C est de 30 % ou moins, dans lequel la résistance à la flexion est déterminée par le procédé dans la description sous le titre « Essai de flexion » (« Flexural test »).

14. Procédé de production d'un matériau composite renforcé par des fibres, le procédé comprenant une étape de chargement et de moulage du composé pour moulage de feuille selon l'une quelconque des revendications 1 à 9 dans un moule,
dans lequel une température de la partie la plus chaude dudit moule est rendue inférieure à une température de transition vitreuse Tg d'un produit durci dudit composé pour moulage de feuille de 10 °C ou plus lorsque ledit composé pour moulage de feuille est moulé, dans lequel la température de transition vitreuse Tg est déterminée par le procédé dans la description sous le titre « Mesure de la température de transition vitreuse Tg » (« Measurement of glass transition temperature Tg »).

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006131759 A
- JP 2008081548 A
- JP 2011231275 A
- JP 2012025122 A
- JP 2012111909 A
- US 2006252868 A1
- EP 3613585 A1
- WO 2016039326 A1
- US 2013281576 A1

**Non-patent literature cited in the description**

- Polymer Handbook. John Wiley & Sons, Inc, 1999
- Polymer Data Handbook. The Society of Polymer Science, 1986
- ACRYESTER. Mitsubishi Chemical Corporation, 2016
- Polymer Handbook. John Wiley & Sons, Inc, 1975